# EUROPÄISCHE PATENTANMELDUNG

(11) **EP 4 410 089 A1**
(43) Veröffentlichungstag der Anmeldung: **07.08.2024**
(21) Anmeldenummer: 23212728.2
(22) Anmeldetag: 28.11.2023
(51) Int. Cl.: A01D 43/073, A01D 43/08

(54) **SELBSTFAHRENDE LANDWIRTSCHAFTLICHE ERNTEMASCHINE**

(30) Priorität: 31.01.2023 DE 102023102284; 31.01.2023 DE 102023000284; 31.01.2023 DE 102023102283; 31.01.2023 DE 102023102282
(71) Anmelder: CLAAS Selbstfahrende Erntemaschinen GmbH, 33428 Harsewinkel (DE)
(72) Erfinder: Deufel, Tobias, 88605 Meßkirch-Menningen (DE); Löffler, Niklas, 88367 Hohentengen (DE)
(74) Vertreter: CLAAS Gruppe

(57) **Zusammenfassung**

Die vorliegende Erfindung betrifft eine selbstfahrende landwirtschaftliche Erntemaschine (1), insbesondere Feldhäcksler, mit einem Vorsatzgerät (2), zumindest einem Nachbeschleunigungsorgan (12) zur veränderlichen Beschleunigung von Erntegut und mit einer dem Nachbeschleunigungsorgan (12) nachgeordneten Überladeeinrichtung (13) zum Auswerfen des Ernteguts in einen Ladebehälter (55), wobei zur veränderlichen Beschleunigung des Erntegutes die Weite eines Erntegutdurchgangsspaltes (40) des Nachbeschleunigungsorgans (12) mittels einer Spaltänderungsvorrichtung (45) anpassbar ist, wobei der Spaltänderungsvorrichtung (45) eine Steuerungsvorrichtung (14) zugeordnet ist, die zur Ansteuerung der Spaltänderungsvorrichtung (45) durch von der Steuerungsvorrichtung (14) generierte Steuersignale eingerichtet ist, wobei die Steuerungsvorrichtung (14) dazu eingerichtet ist, von einer an der Erntemaschine (1) angeordneten Positionsbestimmungseinrichtung kontinuierlich generierte Daten über die aktuelle Position der Erntemaschine (1) auf einem zu bearbeitenden Feld (36) zu empfangen und auszuwerten, und automatisch in Abhängigkeit von einer während der Auswertung der von der Positionsbestimmungseinrichtung empfangenen Daten bestimmten Änderung der Erntesituation die Steuersignale zur Anpassung der Weite des Erntegutdurchgangsspaltes (40) an die geänderte Erntesituation zu generieren.

## Beschreibung

Die vorliegende Erfindung betrifft eine selbstfahrende landwirtschaftliche Erntemaschine gemäß dem Oberbegriff des Anspruches 1. Weiterhin betrifft die vorliegende Erfindung ein Verfahren zum Betreiben einer selbstfahrenden landwirtschaftlichen Erntemaschine gemäß dem Oberbegriff des Anspruches 15.

Eine selbstfahrende landwirtschaftliche Erntemaschine der eingangs genannten Art ist aus der EP 1 380 204 A1 bekannt. Darin ist eine als Feldhäcksler ausgeführte landwirtschaftliche Erntemaschine beschrieben, mit zumindest einem Nachbeschleunigungsorgan zur veränderlichen Beschleunigung von Erntegut und mit einer dem Nachbeschleunigungsorgan nachgeordneten Überladeeinrichtung zum Auswerfen des Ernteguts in einen Ladebehälter. Zur veränderlichen Beschleunigung des Erntegutes ist die Weite eines Erntegutdurchgangsspaltes des Nachbeschleunigungsorgans, der sich zwischen dem Nachbeschleunigungsorgan und einer diesem gegenüberliegenden Wandung eines Förderkanals ausbildet, mittels einer Spaltänderungsvorrichtung anpassbar. Der Spaltänderungsvorrichtung ist eine Steuerungsvorrichtung zugeordnet ist, die zur Ansteuerung der Spaltänderungsvorrichtung durch von der Steuerungsvorrichtung generierte Steuersignale eingerichtet ist. Hierzu ist es aus der EP 1 380 204 A1 bekannt, die Weite des Erntegutdurchgangsspaltes in Abhängigkeit vom Erntegutdurchsatz, der mittels Sensoren zur Messung der Feuchtigkeit, der Dichte und der Geschwindigkeit des Erntegutes bestimmt wird, zu verstellen. Die Sensoren sind innerhalb der Erntemaschine entlang der Gutförderstrecke zwischen Einzugsorgan und Überladeeinrichtung angeordnet. Die Reaktion auf Änderungen im Erntegutstrom erfolgt mithin stets zeitlich versetzt. Zudem führt die zunehmende Fahrgeschwindigkeit, mit der eine Erhöhung der Flächenleistung einhergeht, während des Erntevorgangs zu einer weiteren Reduzierung der Reaktionszeit auf sich ändernde Erntebedingungen oder Erntesituationen. Beim Einfahren in einen Bestand, wie beim Anschneiden eines Feldes oder nach einem Durchfahren eines Vorgewendes, werden kurzzeitig nur geringe Erntegutmengen aufgenommen, die das Aufbauen eines konstanten Erntegutstroms entlang der Gutförderstrecke zur Überladeeinrichtung hin bzw. eines Erntegutstrahls mit ausreichender Wurfweite erschweren, wodurch die Effizienz und Genauigkeit des Überladevorgang beeinflusst wird.

Ausgehend von dem vorstehend genannten Stand der Technik ist es demnach die Aufgabe der vorliegenden Erfindung, eine landwirtschaftliche Erntemaschine der eingangs genannten Art weiterzubilden, die sich durch eine verbesserte Anpassung der Einstellung des Nachbeschleunigungsorgans an sich ändernde Erntesituationen auszeichnet.

Diese Aufgabe wird erfindungsgemäß durch die Merkmale des unabhängigen Patentanspruchs 1 gelöst, wobei vorteilhafte Weiterbildungen der erfindungsgemäßen Erntemaschine Gegenstand der entsprechenden abhängigen Patentansprüche 2 bis 14 sind.

Gemäß dem Anspruch 1 wird eine selbstfahrende landwirtschaftliche Erntemaschine, insbesondere ein Feldhäcksler, mit einem Vorsatzgerät, zumindest einem Nachbeschleunigungsorgan zur veränderlichen Beschleunigung von Erntegut und mit einer dem Nachbeschleunigungsorgan nachgeordneten Überladeeinrichtung zum Auswerfen des Ernteguts in einen Ladebehälter vorgeschlagen, wobei zur veränderlichen Beschleunigung des Erntegutes die Weite eines Erntegutdurchgangsspaltes des Nachbeschleunigungsorgans mittels einer Spaltänderungsvorrichtung anpassbar ist, wobei der Spaltänderungsvorrichtung eine Steuerungsvorrichtung zugeordnet ist, die zur Ansteuerung der Spaltänderungsvorrichtung durch von der Steuerungsvorrichtung generierte Steuersignale eingerichtet ist. Erfindungsgemäß ist vorgesehen, dass die Steuerungsvorrichtung dazu eingerichtet ist, von einer an der Erntemaschine angeordneten Positionsbestimmungseinrichtung kontinuierlich generierte Daten über die aktuelle Position der Erntemaschine auf einem zu bearbeitenden Feld zu empfangen und auszuwerten, und automatisch in Abhängigkeit von einer während der Auswertung der von der Positionsbestimmungseinrichtung empfangenen Daten bestimmten Änderung der Erntesituation die Steuersignale zur Einstellung der Weite des Erntegutdurchgangsspaltes an die geänderte Erntesituation zu generieren.

Der Erfindung liegt die Überlegung zugrunde, in Abhängigkeit von der jeweiligen Position der Erntemaschine eine Einstellung der Weite des Erntegutdurchgangsspaltes durchzuführen, um auf eine Änderung der Erntesituation zu reagieren, die sich mit dem Erreichen einer spezifischen Position durch die Erntemaschine einstellt.

Die Steuerungsvorrichtung kann Bestandteil einer Steuer- und Regelungseinheit der Erntemaschine sein, welche darüberhinausgehende Aufgaben übernimmt, oder als eine separate Steuereinheit ausgeführt sein, die mit einer übergeordneten Steuer- und Regelungseinheit der Erntemaschine verbunden ist.

Insbesondere kann die Positionsbestimmungseinrichtung einen an der Erntemaschine angeordneten Positionsortungssensor und/oder eine Telematikeinheit umfassen. Der Positionsortungssensor kann von einem, insbesondere satellitengestützten, Positionsortungssystem bereitgestellte Daten zur Positionsbestimmung empfangen.

Zusätzlich oder alternativ kann die Positionsbestimmungseinrichtung mit einem Routenplanungssystem der Erntemaschine verbunden sein, welches zur Übermittlung von Informationen, insbesondere topographischer Daten, über das zu bearbeitende Feld an die Positionsbestimmungseinrichtung eingerichtet ist. Diese Informationen ermöglichen es, in Kenntnis der topographischen Gegebenheiten vorausschauend die Einstellungen bzw. eine Anpassung der Weite des Erntegutdurchgangsspaltes durch die Steuerungsvorrichtung zu ermöglichen. Neben den die topografischen Daten umfassenden Informationen können in dem Routenplanungssystem bereits hinterlegte Routen verwendet werden, um beispielsweise die Lage von Vorgewenden, Feldwegen, benachbarten Feldern und dergleichen berücksichtigen zu können.

Zusätzlich oder alternativ kann die Positionsbestimmungseinrichtung mit Einrichtungen der Erntemaschine datentechnisch verbunden sein, welche zur Bestimmung einer aktuellen Fahrgeschwindigkeit der Erntemaschine, einer Änderung der Hubhöhe des Vorsatzgerätes und einer Änderung der Antriebsdrehzahl des Vorsatzgerätes eingerichtet sind, wobei die Positionsbestimmungseinrichtung aus zumindest einem dieser Parameter die Daten über die aktuelle Position der Erntemaschine generiert. Somit kann auch unabhängig von einer sensorisch bestimmten Position die Ansteuerung der Spaltänderungsvorrichtung durch die Steuerungsvorrichtung zur Einstellung der Weite des Erntegutdurchgangsspaltes durchgeführt werden.

Gemäß einer bevorzugten Weiterbildung kann die Erntemaschine zumindest eine Sensoranordnung aufweisen, die zur Detektion einer Schichthöhe in dem Einzugsorgan eingerichtet ist, wobei die Steuerungsvorrichtung dazu eingerichtet ist, die von der zumindest einen Sensoranordnung bestimmten Daten zur Schichthöhe zu empfangen und zur Bestimmung eines Erntegutdurchsatzes auszuwerten. Die zumindest eine Sensoranordnung kann zur Erfassung von Kräften, die von zumindest einem Walzenpaar eines dem Nachbeschleunigungsorgan vorgeschalteten Einzugsorgans auf das aufgenommene Erntegut aufgebracht werden, eingerichtet sein. Zusätzlich oder alternativ kann die zumindest eine Sensoranordnung zur Erfassung einer Auslenkung eines Walzenpaares oder der Walzenpaare eingerichtet sein. Die zumindest eine Sensoranordnung, welche zusätzlich zur Bestimmung des Erntegutdurchsatzes eingerichtet ist, kann die Genauigkeit der Bestimmung des Erntegutdurchsatzes verbessern, wodurch eine genauere Ansteuerung zur Anpassung der Weite des Erntegutdurchgangsspaltes die Steuerungsvorrichtung ermöglicht wird.

Bevorzugt kann die Erntemaschine mit zumindest einem optischen Sensor zur Erkennung eines Vorfeldbereiches ausgestattet sein, wobei der zumindest eine Sensor dazu eingerichtet ist, das Vorhandensein von Erntegut und/oder die Erntegutart im Vorfeld der Erntemaschine zu detektieren und diese Daten an die Steuerungsvorrichtung zur Auswertung zu übertragen. Bei dem zumindest einen optischen Sensor kann es sich bevorzugt um eine Kamera, eine RGB-Kamera, eine 3D-Kamera und/oder ein LIDAR handeln. So wird neben stehendem Erntegut, beispielsweise Mais, in Form von Schwaden abgelegtes Erntegut, beispielsweise Gras, von der Erntemaschine aufgenommen. Das Detektieren des Vorhandenseins von Erntegut in Form eines Schwads umfasst auch die Eigenschaften des von der Erntemaschine in Form des Schwads aufzunehmenden Erntegutes. Unter der Form des Schwads sind die Breite, die Höhe sowie die Kontur zu verstehen. Die Form des Schwads kann Aufschluss über die Gleichmäßigkeit der Verteilung und/oder die aufzunehmende Erntegutmenge geben. Das Vorhandensein des Schwads kann dazu dienen, Änderungen der Erntesituation zu detektieren. Beispielsweise führt eine Lücke im Schwad zu einer temporären Abnahme der zu überladenden Erntegutmenge, auf die durch die Änderung der Weite des Erntegutdurchgangsspaltes reagiert werden kann. Eine vorgenommene Änderung hat dabei nur für den Zeitraum bzw. die Fahrstrecke bestand, bis das Ende Lücke erreicht wird. Eine andere Änderung der Erntesituation stellt das Erreichen des Vorgewendes dar, währenddessen keine Aufnahme von Erntegut erfolgt.

Insbesondere kann die Erntemaschine mit zumindest einem entlang des Erntegutstroms angeordneten Sensor ausgestattet sein, welcher dazu eingerichtet ist, Eigenschaften des Erntegutes zu detektieren und diese Daten an die Steuerungsvorrichtung zur Auswertung zu übertragen. Bei dem zumindest einen zur Detektion von Ernteguteigenschaften eingerichteten Sensor kann es sich um einen NIR-Sensor und/oder einen Feuchtigkeitssensor handeln. Die Anordnung entlang des Erntegutstroms kann an beliebiger Stelle innerhalb der Erntemaschine erfolgen. Eine bevorzugte Anordnung des zumindest einen Sensors kann an der Überladeeinrichtung vorgesehen sein. Während der Feuchtigkeitssensor lediglich die Feuchtigkeit des Erntegutes detektiert, detektiert ein NIR-Sensor darüberhinausgehende Informationen zu Eigenschaften des Erntegutes.

Gemäß einer Weiterbildung kann die Steuerungsvorrichtung dazu eingerichtet sein, bei einem Einfahren in einen Erntegutbestand oder einem Ausfahren aus einem Erntegutbestand die Spaltänderungsvorrichtung anzusteuern, um die Weite des Erntegutdurchgangsspaltes auf einen für die zu erntende Erntegutart und/oder die bestehenden Überladebedingungen spezifischen Minimalwert abzusenken. Somit kann auf unterschiedliche Erntesituationen, zu denen das Anschneiden eines Feldes sowie das Verlassen des Feldbestands beim Erreichen eines Vorgewendes, das Durchfahren des Vorgewendes und das anschließende Einfahren in den Feldbestand gehören, automatisch reagiert werden, indem die Spaltänderungsvorrichtung entsprechend angesteuert wird. Sowohl das Anschneiden eines Feldes als auch das Durchfahren eines Vorgewendes haben Einfluss auf die Überladebedingungen. Beim Anschneiden eines Feldes kann die Situation des Überladens nach hinten auftreten, wenn das Zugfahrzeug und der daran angeordnete Ladebehälter aus Platzgründen nicht seitlich neben dem Erntefahrzeug fahren können. Die Steuerungsvorrichtung kann zusätzlich dazu eingerichtet sein, bei einer Änderung der Hubhöhe des Vorsatzgerätes die Spaltänderungsvorrichtung anzusteuern, um die Weite des Erntegutdurchgangsspaltes zu verändern.

Damit kann dem Umstand Rechnung getragen werden, dass die Überladeeinrichtung während des Durchfahrens eines Vorgewendes aus ihrer bisherigen Überladeposition, beispielsweise zur Seite oder nach hinten, in eine hiervon abweichende neue Überladeposition bewegt wird. Während sich beim Anschneiden der Ladebehälter in der Regel hinter der Erntemaschine befindet, kann dieser nach dem Durchfahren des ersten Vorgewendes seitlich von der Erntemaschine positioniert werden, wodurch sich die Wurfweite reduziert. Wie beim Ausfahren aus dem Erntegutbestand auch, ist mit dem erneuten Einfahren in den Erntegutbestand der Erntegutdurchsatz anfänglich entsprechend gering, was zunächst eine höhere Beschleunigung des Erntegutes für ein zuverlässiges Überladen erfordert, bis sich ein kontinuierlicher Erntegutdurchsatz einstellt. Entsprechend wird die Weite des Erntegutdurchgangsspaltes zunächst reduziert, wodurch bei geringem Erntegutdurchsatz, wie er beim Einfahren bzw. Ausfahren aus dem Erntegutbestand vorliegt, der Aufbau eines stetigen Gutstrahls beschleunigt wird. Mit zunehmendem Erntegutdurchsatz wird die Weite des Erntegutdurchgangsspaltes vergrößert.

Des Weiteren kann die Steuerungsvorrichtung dazu eingerichtet sein, bei einer Detektion des Einfahrens in den Erntegutbestand eine dem Antrieb des Vorsatzgerätes dienende Antriebsvorrichtung anzusteuern, um die Antriebsdrehzahl des Vorsatzgerätes temporär zu erhöhen und bei Detektion des Ausfahrens aus dem Erntegutbestand temporär abzusenken. Somit können die Spaltänderungsvorrichtung und die dem Antrieb des Vorsatzgerätes dienende Antriebsvorrichtung positionsabhängig durch die Steuerungsvorrichtung angesteuert werden, um auf die kurzzeitig reduzierte oder erhöhte aufnehmbare Erntegutmenge beim Herausfahren bzw. Einfahren in den Bestand zu reagieren.

Die Steuerungsvorrichtung kann auch dazu eingerichtet sein, die Spaltänderungsvorrichtung in Abhängigkeit einer Kombination aus Antriebsdrehzahl des Vorsatzgerätes und Hubhöhe des Vorsatzgerätes anzusteuern, um die Weite des Erntegutdurchgangsspaltes zu verändern.

Besonders praktisch erweist es sich, den Prozess zum Verschwenken der Überladeeinrichtung entgegen der Fahrtrichtung in ein vorhandenes elektronisches Vorgewende-Management-System, auch als Headland-Management-System bekannt, zu integrieren. Dabei wird mittels des Vorgewende-Management-Systems das Verschwenken der Überladeeinrichtung entgegen der Fahrtrichtung insbesondere dann aktiviert, wenn vom Vorgewende-Management-System sensiert wird, dass die Erntemaschine während der Fahrt im Vorgewende über eine vorab definierte Ernte-Sollfahrgeschwindigkeit beschleunigt wird, so dass der Verschwenkvorgang insgesamt automatisiert werden kann und der Bediener eine erhebliche Entlastung erfährt und Überladeverluste vermeidbar sind.

Bevorzugt kann das Nachbeschleunigungsorgan eine Drehachse aufweisen, die endseitig in Führungen gelagert ist, die an Seitenwänden eines das Nachbeschleunigungsorgan zumindest abschnittsweise ummantelnden Gehäuses angeordnet sind, wobei die Spaltänderungsvorrichtung zur, insbesondere translatorischen, Bewegung des Nachbeschleunigungsorgans eine Aktorik umfasst, mittels der die Weite des Erntegutdurchgangsspaltes veränderbar ist. Denkbar ist auch eine Schwenkbewegung des Nachbeschleunigungsorgans, um die Weite des Erntegutdurchgangsspaltes zu verändern. Vorteilhaft übermittelt ein dem Nachbeschleunigungsorgan und/oder der Aktorik zugeordneter Sensor das jeweilige Stellmaß an die Steuerungsvorrichtung.

Dazu kann die Aktorik mechanisch, hydraulisch und/oder elektromechanisch betätigbare Antriebselemente umfassen. Als zumindest ein hydraulisch und/oder elektromechanisch betätigbares Antriebselement kann beispielsweise zumindest ein Hydraulikzylinder oder zumindest ein Linearmotor vorgesehen sein. Als mechanisch betätigbare Antriebselemente können beispielsweise zumindest eine Hebelanordnung sowie eine Welle vorgesehen sein. Das zumindest eine hydraulisch und/oder elektromechanisch betätigbare Antriebselement kann an einem ersten Anlenkpunkt an der Welle angreifen und diese um eine ortsfeste Drehachse schwenken. Die zumindest eine Hebelanordnung kann an einem zum ersten Anlenkpunkt beabstandeten zweiten Anlenkpunkt an der Welle angreifen, sodass die Bewegung des hydraulisch und/oder elektromechanisch betätigbaren Antriebselementes auf die Hebelanordnung übertragen wird. Der erste Anlenkpunkt und der zweite Anlenkpunkt können an einander gegenüberliegenden Stellen der Welle angeordnet sein.

Gemäß einer bevorzugten Weiterbildung kann die Steuerungsvorrichtung eine Speichereinheit umfassen, in der zumindest eine Kennlinie oder ein Kennlinienfeld für die einzustellende Weite des Erntegutdurchgangsspaltes in Abhängigkeit zumindest von der Position der Erntemaschine hinterlegt ist, und dass die Steuerungsvorrichtung eine Recheneinheit umfassen kann, welche die zumindest eine Kennlinie oder das zumindest eine Kennlinienfeld zur Ansteuerung der Spaltänderungsvorrichtung auswertet.

Insbesondere kann die Steuerungsvorrichtung dazu eingerichtet sein, von einer Schwaddetektionseinrichtung generierte Daten, welche Eigenschaften des von der Erntemaschine in Form eines Schwads aufzunehmenden Erntegutes umfassen, und/oder von einer Detektionseinrichtung generierte Daten, welche zumindest die Position der Überladeeinrichtung umfassen, zu empfangen und auszuwerten, und in Abhängigkeit von der Auswertung der Daten die Steuersignale zur Anpassung der Weite des Erntegutdurchgangsspaltes zu generieren.

Hierzu kann die Schwaddetektionseinrichtung mit dem zumindest einen optischen Sensor zur Erkennung eines Vorfeldbereiches ausgestattet sein.

Mittels der Schwaddetektionseinrichtung lassen sich im Vorfeldbereich der Erntemaschine auftretende Unregelmäßigkeiten des in Form des Schwads abgelegten Erntegutes frühzeitig zu erkennen, um dadurch auf sich ändernde Erntebedingungen oder Erntesituationen zeitnäher, d.h. vorausschauender, reagieren zu können. Die Ablage des Schwads erfolgt in einem vorangehenden Bearbeitungsprozess, in welchem es bei der Ablage aufgrund verschiedener Einflüsse zu Unregelmäßigkeiten kommen kann. Beispielsweise führen Schwankungen in der Bestandsdichte, Beschädigungen am für die Schwadablage verwendeten Arbeitsgerät und/oder während der Schwadablage auftretende Bedienfehler zu derartigen Unregelmäßigkeiten. Weiteren Einfluss haben die Witterungsbedingen sowohl während und nach der Schwadablage als auch während der Aufnahme des Schwads durch die dafür eingerichtete Erntemaschine.

Mittels der Detektionseinrichtung lässt sich in Abhängigkeit von der detektierten Position der Überladeeinrichtung eine Änderung einer Überladesituation zu bestimmen, um darauf zeitnäher, d.h. vorausschauender, reagieren zu können. So erfordert das seitliche Überladen von Erntegut, d.h. auf einen im Wesentlichen parallel zur Erntemaschine positionierten Ladewagen, in der Regel aufgrund der geringen Wurfdistanz eine geringere Nachbeschleunigungsleistung als das Überladen auf einen hinter der Erntemaschine positionierten Ladewagen, bei dem sich, bedingt durch ein den Ladewagen ziehendes Zugfahrzeug, eine größere Wurfdistanz einstellt.

Weiterhin kann die Detektionseinrichtung einen Drehwinkelsensor zur Erfassung eines Drehwinkels sowie einen Höhensensor zur Erfassung eines Höhenschwenkwinkels der Überladeeinrichtung und einen Winkelsensor zur Erfassung eines Schwenkwinkels einer an der Überladeeinrichtung am auswurfseitigen Ende angeordneten Auswurfklappe umfassen.

Des Weiteren kann an der Überladevorrichtung eine optische Sensoranordnung angeordnet sein, welche zur Bestimmung der Position und/oder der Art des Ladebehälters und/oder zur Bestimmung eines Auftreffpunkts des Ernteguts in dem Ladebehälter eingerichtet ist. Mittels der optischen Sensoranordnung lässt sich bestimmen, in welchem Abstand sich der Ladebehälter zur Erntemaschine befindet und welche räumliche Position der Ladebehälter relativ zu der Erntemaschine einnimmt.

Eine Kombination der Verwendung und Auswertung der Daten, die von der Positionsbestimmungseinrichtung und/oder der Schwaddetektionseinrichtung und/oder der Detektionseinrichtung bereitgestellt werden, um die Steuersignale zur Anpassung der Weite des Erntegutdurchgangsspaltes zu generieren, verbessert die Genauigkeit der Einstellung sowie die zeitliche Abstimmung bei der Anpassung der Weite des Erntegutdurchgangsspaltes als Reaktion auf sich ändernde Erntebedingungen.

Die erfindungsgemäße Aufgabe wird ferner durch ein Verfahren zum Betreiben einer selbstfahrenden landwirtschaftlichen Erntemaschine, insbesondere eines Feldhäckslers, mit zumindest einem Nachbeschleunigungsorgan zur veränderlichen Beschleunigung von Erntegut und mit einer dem Nachbeschleunigungsorgan nachgeordneten Überladeeinrichtung zum Auswerfen des Ernteguts in einen Ladebehälter, wobei zur veränderlichen Beschleunigung des Erntegutes die Weite eines Erntegutdurchgangsspaltes des Nachbeschleunigungsorgans mittels einer Spaltänderungsvorrichtung angepasst wird, wobei die Spaltänderungsvorrichtung durch von einer Steuerungsvorrichtung generierte Steuersignale angesteuert wird, gemäß dem unabhängigen Anspruch 15 gelöst.

Erfindungsgemäß ist vorgesehen, dass die Steuerungsvorrichtung von einer an der Erntemaschine angeordneten Positionsbestimmungseinrichtung kontinuierlich generierte Daten über die aktuelle Position der Erntemaschine auf einem zu bearbeitenden Feld empfängt, auswertet und automatisch in Abhängigkeit von einer während der Auswertung der von der Positionsbestimmungseinrichtung empfangenen Daten bestimmten Änderung der Erntesituation die Steuersignale zur Anpassung der Weite des Erntegutdurchgangsspaltes an die geänderte Erntesituation zu generiert. Auf die erfindungsgemäßen Vorteile der selbstfahrenden landwirtschaftlichen Erntemaschine darf verwiesen werden.

Die vorliegende Erfindung wird nachstehend anhand eines in den Zeichnungen dargestellten Ausführungsbeispieles näher erläutert.

Es zeigen:
- Fig. 1: eine schematische Darstellung einer als selbstfahrender Feldhäcksler ausgeführten landwirtschaftlichen Erntemaschine in Seitenansicht;
- Fig. 2: eine schematische Darstellung der Erntemaschine gemäß Fig. 1 mit einem als Pick-up ausgeführten Vorsatzgerät zur Aufnahme eines Schwads;
- Fig. 3: schematisch und exemplarisch eine Seitenansicht eines Nachbeschleunigungsorgans der Erntemaschine in einer Position mit minimaler Weite eines Erntegutdurchgangsspaltes;
- Fig. 4: schematisch und exemplarisch eine Seitenansicht des Nachbeschleunigungsorgans gemäß Fig. 3 in einer Position mit maximaler Weite des Erntegutdurchgangsspaltes; und
- Fig. 5: eine schematische Ansicht auf eine Erntesituation der Erntemaschine gemäß Fig. 2 von oben.

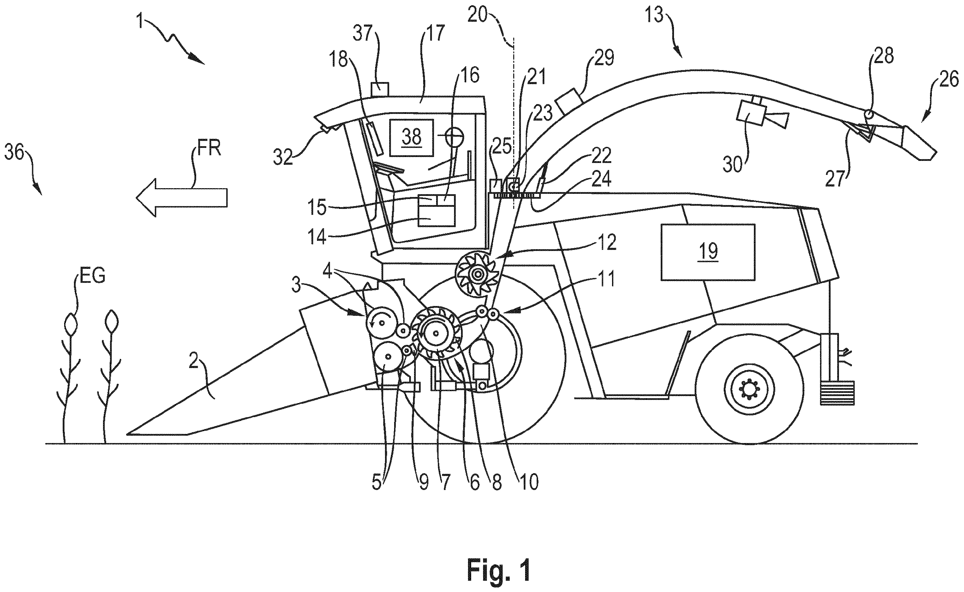

In Fig. 1 ist eine als Feldhäcksler ausgeführte selbstfahrende landwirtschaftliche Erntemaschine 1 abgebildet, an welcher im frontseitigen Bereich zur Aufnahme von Erntegut EG ein Vorsatzgerät 2 angeordnet ist. Das Vorsatzgerät 2 variiert in Abhängigkeit von der zu erntenden bzw. aufzunehmenden Erntegutart. So kann Erntegut EG als stehendes Erntegut, beispielsweise in Form von Mais, oder als zu Schwaden geformtes, abgelegtes Erntegut, beispielsweise in Form von Gras, mittels des Vorsatzgerätes 2 geerntet bzw. aufgenommen werde.

Das Vorsatzgerät 2 nimmt das Erntegut EG vom Feld auf und fördert es einem Einzugsorgan 3 zu, das im dargestellten Ausführungsbeispiel aus einer Walzengruppe mit oberen und unteren Einzugswalzen 4, 5 besteht. Die Einzugswalzen 4, 5 des Einzugsorgans 3 üben eine Presskraft auf das aufgenommene Erntegut aus. Das Einzugsorgan 3 fördert das zu einer Erntegutmatte verdichtete Erntegut EG einer Häckselvorrichtung 6 zu, welche eine rotierend angetriebene Häckseltrommel 7 mit über deren Umfang verteilt angeordneten Häckselmessern 8 aufweist. Die Häckselmesser 8 schneiden die von dem Einzugsorgan 3 zugeführte Erntegutmatte an einer Gegenschneide 9. Das geschnittene bzw. gehäckselte Erntegut EG gelangt durch die Rotationsbewegung der Häckseltrommel 7 in einen nachgeordneten Förderkanal 10, von wo es je nach Ausstattung des Feldhäckslers 1 durch eine optional im Gutflussweg angeordnete Nachbearbeitungsvorrichtung 11, auch als Konditioniervorrichtung oder Corncracker bezeichnet, aufbereitet und von einem nachgeordneten Nachbeschleunigungsorgan 12 zusätzlich beschleunigt durch eine verstellbare Überladeeinrichtung 13 in ein mitgeführtes Transportfahrzeug gefördert wird. Die optionale Nachbearbeitungsvorrichtung 11 kann wahlweise aus dem Gutflussweg ausgeschwenkt oder vollständig entfernt werden. Die Überladeeinrichtung 13 ist um eine vertikal verlaufende Achse 20 drehbar, beispielsweise mittels eines Drehkranzes. Zusätzlich und unabhängig davon ist die Überladeeinrichtung 13 um eine horizontal verlaufende Achse 21 schwenkbar. Am freien Ende der Überladeeinrichtung 13 kann eine sogenannte Auswurfklappe 26 angeordnet sein, welche gegenüber der Überladeeinrichtung 13 um eine horizontal verlaufende Achse schwenkbar ist.

Zum Antreiben der Arbeitsaggregate der Erntemaschine 1, d.h. von Vorsatzgerät 2, Einzugsorgan 3, Häckselvorrichtung 6, optional der Nachbearbeitungsvorrichtung 11, sowie dem Nachbeschleunigungsorgan 12, ist ein Antriebsmotor 19 vorgesehen. Die Arbeitsaggregate können durch einen - nicht dargestellten - Hauptantriebsstrang, mit der Motorabtriebswelle des Antriebsmotors 19 verbunden sein. Der Antriebsmotor 19 dient auch zum Betreiben eines hydrodynamischen Fahrantriebs des Feldhäckslers 1.

Die Erntemaschine 1 umfasst eine Fahrerkabine 17, in der eine Eingabe-Ausgabe-Einheit 18 angeordnet ist. Weiterhin umfasst die Erntemaschine 1 eine Steuerungsvorrichtung 14, welche eine Speichereinheit 15 zum Hinterlegen von Daten und eine Recheneinheit 16 zur Verarbeitung der in der Speichereinheit 15 hinterlegten Daten umfasst. Die Steuerungsvorrichtung 14 ist dazu eingerichtet, einen Bediener der Erntemaschine 1 bei der Bedienung derselben zu unterstützen. Die Steuerungsvorrichtung 14 ist dabei zur Ansteuerung zumindest des Nachbeschleunigungsorgans 12 eingerichtet.

Die Überladeeinrichtung 13, auch als Auswurfkrümmer bezeichnet, ist um die vertikal verlaufende Achse 20 seitlich drehbar und um die horizontal verlaufende Achse 21 höhenverstellbar gegenüber dem Rahmen der Erntemaschine 1 gelagert. Ein zwischen dem Rahmen und der Überladeeinrichtung 13 wirkender Linearaktor 22, hier und vorzugsweise zumindest ein Hubzylinder, dient zur Verstellung der Höhe der Überladeeinrichtung 13. Ein Höhensensor 23 in Form eines Drehpotentiometers erfasst den jeweiligen Höhenschwenkwinkel. Mittels einer Aktorik 24, hier und vorzugsweise eines antreibbaren Drehkranzes, lässt sich die Überladeeinrichtung 13 gegenüber dem Rahmen der Erntemaschine 1 drehen. Ein Drehwinkelsensor 25 in Form eines Drehpotentiometers erfasst den jeweiligen Drehwinkel der Überladeeinrichtung 13.

Am maschinenabgewandten Ende der Überladeeinrichtung 13 ist die Auswurfklappe 26 angeordnet, durch deren Verschwenkbarkeit sich der Auswurfwinkel des Ernteguts EG aus der Überladeeinrichtung 13 - und damit auch die erzielte Wurfweite - kurzfristig beeinflussen lässt. Die Verstellung wird durch einen Aktuator 27, hier und vorzugsweise einen hydraulischen Stellzylinder, bewirkt, wobei ein der Auswurfklappe 26 zugeordneter Winkelsensor 28, ebenfalls in Form eines Drehpotentiometers, die Stellung der Auswurfklappe 26 erfasst.

Des Weiteren kann entlang des Erntegutstroms zumindest ein Sensor 29 angeordnet sein, welcher Eigenschaften des aufgenommenen Erntegutes EG detektiert. Bei dem zumindest einen einem entlang des Erntegutstroms angeordneten Sensor 29 kann es sich bevorzugt um einen NIR-Sensor und/oder einen Feuchtigkeitssensor handeln Die Anordnung des zumindest einen Sensors 29 entlang des Erntegutstroms kann an beliebiger Stelle innerhalb der Erntemaschine 1 erfolgen. Eine bevorzugte Anordnung des zumindest einen Sensors 29 kann an der Überladeeinrichtung 13 vorgesehen sein. Während der Feuchtigkeitssensor lediglich die Feuchtigkeit des Erntegutes EG detektiert, detektiert ein NIR-Sensor darüberhinausgehende Informationen von Eigenschaften des Erntegutes EG.

Zur optischen Erfassung eines erreichten Auftreffpunkts des im Erntebetrieb ausgeworfenen Ernteguts EG sowie ggf. zur optischen Erfassung weiterer Merkmale wie der Lage, Form, Abmessung, eines Befüllzustands eines Ladebehälters etc., ist an der Überladeeinrichtung 13 eine auf einen Wurfzielbereich der Überladeeinrichtung 13 ausgerichtete optische Sensoranordnung 30 angebracht. Bei der Sensoranordnung 30 kann es sich bevorzugt um eine Stereokamera handeln, die unter anderem betreibbar ist, aus aufgenommenen Bildern den Abstand optisch erfasster Objekte zu ermitteln. Insbesondere eignet sich die Sensoranordnung 30 zur Ermittlung einer Wurfweite des durch die Überladeeinrichtung 13 ausgeworfenen Ernteguts EG. Alternativ oder ergänzend könnte an einer weiteren Stelle, beispielsweise in der Nähe des Wurfziels, ein optischer Sensor angeordnet sein.

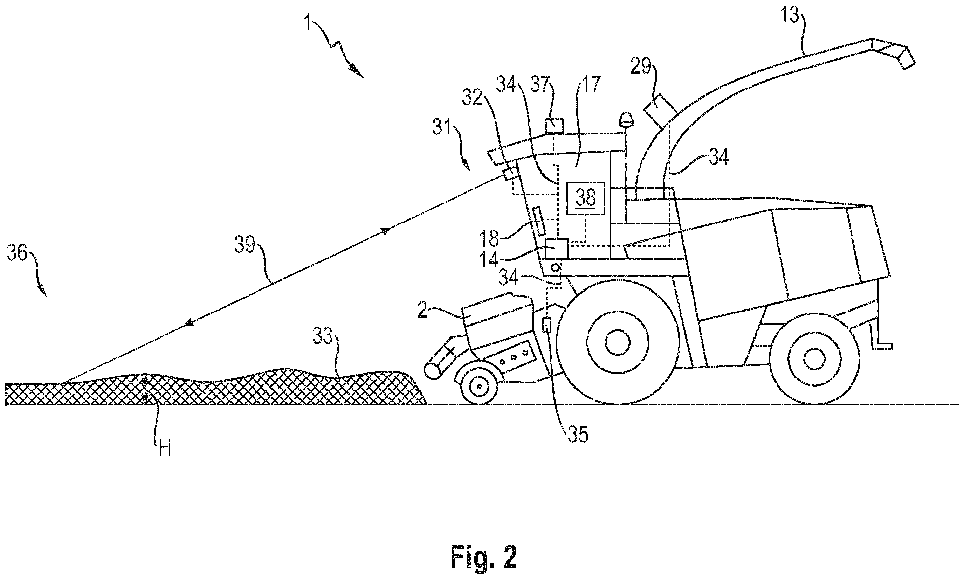

In Fig. 2 ist eine schematische Darstellung der Erntemaschine 1 gemäß Fig. 1 mit einem als Pick-up ausgeführten Vorsatzgerät 2 zur Aufnahme eines Schwads 33 dargestellt. An der Erntemaschine 1 ist hierzu eine Schwaddetektionseinrichtung 31 angeordnet. Die Schwaddetektionseinrichtung 31 ist mit zumindest einem optischen Sensor 32 zur Erkennung eines Vorfeldbereiches, d.h. eines in Fahrtrichtung vor der Erntemaschine 1 liegenden Abschnitts, ausgestattet. Der zumindest eine optische Sensor 32 ist dazu eingerichtet, das Vorhandensein und/oder die Form des aufzunehmenden Schwads 33 vor der Erntemaschine 1 zu erkennen. Die Schwaddetektionseinrichtung 31 überträgt durch den zumindest einen optischen Sensor 32 bestimmte Daten an die Steuerungsvorrichtung 14 zur Auswertung. Hierzu ist der zumindest eine optische Sensor 32 mittels eines Bussystems 34 der Erntemaschine 1 mit der Steuerungsvorrichtung 14 verbunden. Der zumindest eine optische Sensor 32 kann als Kamera, RGB-Kamera, 3D-Kamera oder LI DAR ausgeführt sein.

Der zumindest eine an der Fahrerkabine 17 angeordnete Sensor 32 detektiert mittels Abtaststrahlen 39 das Vorhandensein des Schwads 33 ebenso wie dessen Geometrie respektive Form, mit welcher der Schwad 33 in einem vorangehenden Prozess auf dem Boden abgelegt wurde. Wie aus der Darstellung in Fig. 2 ersichtlich ist, weist der Schwad 33 in der Regel eine unregelmäßige Höhenkontur H auf. Die Höhenkontur H verändert sich entlang des Schwads 33 unter anderem in Abhängigkeit von der Bestandsdichte des zuvor abgeernteten Erntegutes EG. Weitere Einflüsse können sich aus dem vorangehenden Prozess der Ausbildung des Schwads 33 ergeben.

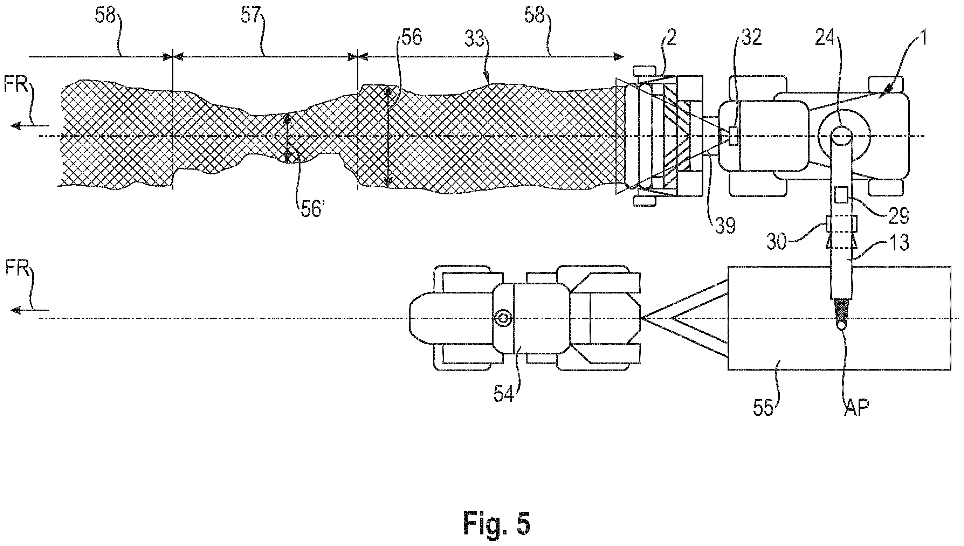

Die Darstellung in Fig. 5 zeigt eine schematische Ansicht auf eine Erntesituation der Erntemaschine 1 gemäß Fig. 2 von oben. Die Erntemaschine 1 wird von einem Zugfahrzeug 54 und einem daran angehängten Ladebehälter 55 begleitet, welche zum Überladen in Abhängigkeit von der Erntesituation in einer Fahrspur im Wesentlichen parallel zur Erntemaschine 1 oder in der Fahrspur hinter der Erntemaschine 1 fahren. Der Schwad 33 weist in der Regel nicht nur eine unregelmäßige Höhenkontur H auf, sondern variiert in unterschiedlichem Maße auch in seiner Breite 56. Mit 57 ist ein Abschnitt entlang des aufzunehmenden Schwads 33 bezeichnet, welcher aufgrund einer geringeren Bestandsdichte an Erntegut EG eine geringere Breite 56` aufweist als der vorangehende Abschnitt bzw. ein nachfolgender Abschnitt 58.

Weiterhin kann die Schwaddetektionseinrichtung 31 mit zumindest einer Sensoranordnung 35 ausgeführt sein, welche zur Detektion einer Schichthöhe in dem Einzugsorgan 3 eingerichtet ist. Mittels der Sensoranordnung 35 lässt sich das Vorhandensein von Erntegut EG und der Durchsatz an aufgenommenem Erntegut EG bestimmen.

Die Erntemaschine 1 umfasst weiter eine Positionsbestimmungseinrichtung, welche dazu eingerichtet ist, kontinuierlich Daten über die aktuelle Position der Erntemaschine 1 auf einem zu bearbeitenden Feld 36 zu generieren. Hierzu kann die Positionsbestimmungseinrichtung zumindest einen Positionsortungssensor 37 umfassen. Zusätzlich oder alternativ kann die Positionsbestimmungseinrichtung eine Telematikeinheit umfassen.

Des Weiteren kann die Positionsbestimmungseinrichtung mit einem Routenplanungssystem 38 der Erntemaschine 1 verbunden sein, welches zur Übermittlung von Informationen, insbesondere topographischer Daten, über das zu bearbeitende Feld 36 an die Positionsbestimmungseinrichtung eingerichtet ist.

Alternativ oder zusätzlich kann die Positionsbestimmungseinrichtung mit Einrichtungen der Erntemaschine 1 datentechnisch verbunden sein, welche zur Bestimmung einer aktuellen Fahrgeschwindigkeit der Erntemaschine 1, einer Änderung der Hubhöhe des Vorsatzgerätes 2 und einer Änderung der Antriebsdrehzahl des Vorsatzgerätes 2 eingerichtet sind, wobei die Positionsbestimmungseinrichtung aus zumindest einem dieser Parameter die Daten über die aktuelle Position der Erntemaschine 1 generiert. Anhand von Änderungen zumindest eines dieser Parameter, Fahrgeschwindigkeit, Hubhöhe und/oder Antriebsdrehzahl, kann auf eine positionsabhängige Änderung der Erntesituation, insbesondere das Einfahren in den Bestand oder das Ausfahren aus dem Bestand, geschlossen werden.

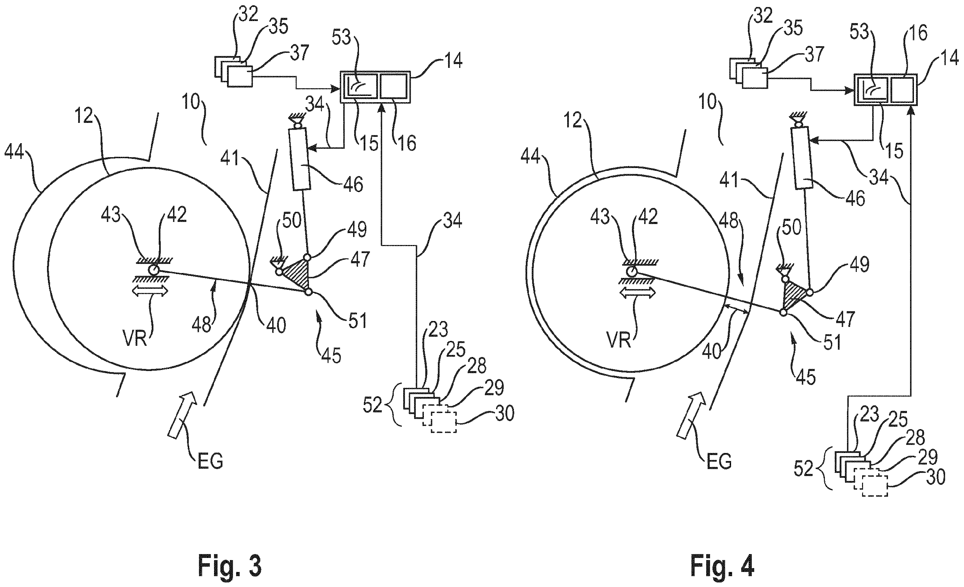

In Fig. 3 ist schematisch und exemplarisch eine Seitenansicht des Nachbeschleunigungsorgans 12 der Erntemaschine 1 in einer Position mit minimaler Weite eines Erntegutdurchgangsspaltes 40 dargestellt. In Fig. 3 beträgt die minimale Weite des einstellbaren Erntegutdurchgangsspaltes 40 etwa 2 mm.

Die Darstellung in Fig. 4 zeigt schematisch und exemplarisch eine Seitenansicht des rotierend angetriebenen Nachbeschleunigungsorgans 12 gemäß Fig. 2 in einer Position mit maximaler Weite des Erntegutdurchgangsspaltes 40. Die maximale Weite des einstellbaren Erntegutdurchgangsspaltes 40 beträgt etwa 80 mm.

Die Weite des einstellbaren Erntegutdurchgangsspaltes 40 des Nachbeschleunigungsorgans 12 bezeichnet den Abstand zwischen dem Nachbeschleunigungsorgan 12 respektive dessen Hüllkreis und einer diesem gegenüberliegenden Wandung 41 des Förderkanals 10 der Erntemaschine 1.

Das Nachbeschleunigungsorgan 12 weist eine Drehachse 42 auf, um welche das Nachbeschleunigungsorgan 12 rotierend antreibbar ist. Die Drehachse 42 ist endseitig in Führungen 43 verschiebbar gelagert. Der Pfeil VR veranschaulicht mögliche Verstellrichtungen. Die Führungen 43 sind an Seitenwänden, die ein das Nachbeschleunigungsorgan 12 zumindest abschnittsweise ummantelndes Gehäuse 44 begrenzen, angeordnet. Die Seitenwände können Teil des Gehäuses 44 sein.

Zur veränderlichen Beschleunigung des entlang des Förderkanals 10 geförderten Erntegutes EG ist die Weite des Erntegutdurchgangsspaltes 40 des Nachbeschleunigungsorgans 12 mittels einer Spaltänderungsvorrichtung 45 anpassbar. Der Spaltänderungsvorrichtung 45 ist die Steuerungsvorrichtung 14 zugeordnet, die zur Ansteuerung der Spaltänderungsvorrichtung 45 durch von der Steuerungsvorrichtung 14 generierte Steuersignale eingerichtet ist.

Die Spaltänderungsvorrichtung 45 umfasst gemäß der dargestellten Ausführungsform zur, insbesondere translatorischen, Bewegung (Pfeil VR) des Nachbeschleunigungsorgans 12 eine Aktorik, mittels der die Weite des Erntegutdurchgangsspaltes 40 veränderbar ist. Durch die Änderung der Weite des Erntegutdurchgangsspaltes 40 wird auf unterschiedliche Betriebssituationen reagiert, in welchen eine unterschiedliche Beschleunigung des Erntegutes EG durch das Nachbeschleunigungsorgan 12 erforderlich ist.

Die Aktorik der Spaltänderungsvorrichtung 45 umfasst mechanisch, hydraulisch und/oder elektromechanisch betätigbare Antriebselemente 46, 47, 48. Im dargestellten Ausführungsbeispiel umfasst die Spaltänderungsvorrichtung 45 zumindest einen Hydraulikzylinder 46, eine Welle 47 sowie zumindest eine Hebelanordnung 48 als Antriebselemente. Vorteilhaft übermittelt ein dem Nachbeschleunigungsorgan 12 und/oder der Aktorik zugeordneter Sensor das jeweilige Stellmaß an die Steuerungsvorrichtung 14.

Das zumindest eine hydraulisch und/oder elektromechanisch betätigbare Antriebselement, hier und vorzugsweise der zumindest eine Hydraulikzylinder 46, kann an einem ersten Anlenkpunkt 49 an der Welle 47 angreifen und diese um eine ortsfeste Drehachse 50 schwenken. Die zumindest eine Hebelanordnung 48 greift an einem zum ersten Anlenkpunkt 49 beabstandeten zweiten Anlenkpunkt 51 an der Welle 47 an, sodass die Bewegung des zumindest einen Hydraulikzylinders 46 auf die Hebelanordnung 48 übertragen wird. Der erste Anlenkpunkt 49 und der zweite Anlenkpunkt 51 können an einander gegenüberliegenden Stellen der Welle 47 angeordnet sein. Bevorzugt sind zwei zueinander beabstandet angeordnete hydraulisch und/oder elektromechanisch betätigbare Antriebselemente, hier und vorzugsweise zwei Hydraulikzylinder 46, vorgesehen, welche in Endbereichen der Welle 47 an dieser angreifen. Das Vorsehen zweier hydraulisch und/oder elektromechanisch betätigbarer Antriebselemente ermöglicht eine gleichmäßigere Verstellung der Welle 47.

Das Einfahren der Kolbenstange des zumindest einen Hydraulikzylinders 46 bewirkt ein Drehen oder Schwenken der Welle 47 gegen den Uhrzeigersinn, wodurch die Drehachse 42 des Nachbeschleunigungsorgan 12 in Richtung der Wandung 41 bewegt wird, bis die minimal einstellbare Weite des Erntegutdurchgangsspaltes 40 erreicht ist, wie in Fig. 3 dargestellt.

Das kontinuierliche Ausfahren der Kolbenstange des Hydraulikzylinders 46 bewirkt ein Drehen oder Schwenken der Welle 47 im Uhrzeigersinn, wodurch die Drehachse 42 des Nachbeschleunigungsorgans 12 zur Wandung 41 zunehmend beabstandet wird, bis die maximal einstellbare Weite des Erntegutdurchgangsspaltes 40 erreicht ist, wie in Fig. 4 dargestellt.

Wesentlich ist, dass die Spaltänderungsvorrichtung 45 eine Verstellcharakteristik mit einem im Wesentlichen progressiv ansteigenden Verlauf der Einstellung der Weite des Erntegutdurchgangsspaltes 40 aufweist. Der Vorteil einer derart ausgeführten und ansteuerbaren Spaltänderungsvorrichtung 45 besteht darin, dass bei einer Einstellung kleiner Werte für die Weite des Erntegutspaltes 40 eine sehr präzise Einstellung durch die Spaltänderungsvorrichtung 45 ermöglicht wird, während mit der Einstellung zunehmender Werten für die Weite die Veränderung schneller durch die Ansteuerung der Spaltänderungsvorrichtung 45 erreicht wird. Dabei ist eine präzise Einstellung kleiner Abstandswerte für die Weite des Erntegutdurchgangsspaltes 40 für trockenes Erntegut und/oder für geringe Erntegutdurchsätze relevant. Die präzise Einstellung kleiner Abstandswerte für die Weite des Erntegutdurchgangsspaltes 40 ermöglicht bei trockenem Erntegut und/oder geringem Erntegutdurchsatz eine optimale Beschleunigung und einen energieeffizienteren Betrieb der des Nachbeschleunigungsorgans 12. Das vor allem schnelle Einstellen großer Abstandswerte für die Weite des Erntegutdurchgangsspaltes 40 ist relevant, um auf eine sprunghafte Zunahme der Erntegutdurchsätze, wie sie nach kurz dem Einfahren in den Bestand auftreten, reagieren zu können sowie um den Energieverbrauch zu optimieren. Somit kann einer Verstopfung im Bereich des Nachbeschleunigungsorgans 12 begegnet werden, wenn nach einem Einfahren in den Erntegutbestand der Erntegutdurchsatz überproportional zunimmt.

Die Erntemaschine 1 umfasst eine Detektionseinrichtung 52. Die Detektionseinrichtung 52 generiert Daten, welche zumindest die räumliche Position der Überladeeinrichtung 13 einschließlich der Position der Auswurfklappe 26 relativ zur Überladeeinrichtung 13 umfassen. Die Detektionseinrichtung 52 umfasst dazu den Drehwinkelsensor 23 zur Erfassung des Drehwinkels, den Höhensensor 25 zur Erfassung des Höhenschwenkwinkels sowie den Winkelsensor 28 zur Erfassung des Schwenkwinkels der Auswurfklappe 26. Ergänzend können der Sensor 29 sowie die Sensoranordnung 30 von der Detektionseinrichtung 45 umfasst sein.

Die Steuerungsvorrichtung 14 ist weiter dazu eingerichtet, von der Detektionseinrichtung 52 generierte Daten zu empfangen und auszuwerten, welche zumindest die Position der Überladeeinrichtung 13 umfassen. Die Steuerungsvorrichtung 14 ist dazu eingerichtet, in Abhängigkeit von der Auswertung der Daten der Detektionseinrichtung 52 die Steuersignale zur Anpassung der Weite des Erntegutdurchgangsspaltes 40 zu generieren.

Zur Übertragung von Daten an die Steuerungsvorrichtung 14 wird das Bussystem 34 der Erntemaschine 1 verwendet.

In der Speichereinheit 15 kann zumindest eine Kennlinie 53 oder ein Kennlinienfeld für die einzustellende Weite des Erntegutdurchgangsspaltes 40 in Abhängigkeit von zumindest einer Eingangsgröße, die von der Positionsbestimmungseinrichtung bereitgestellt wird, hinterlegt sein, wobei die Recheneinheit 16 die zumindest eine Kennlinie 53 oder das zumindest eine Kennlinienfeld zur Ansteuerung der Spaltänderungsvorrichtung 45 auswertet.

Die Steuerungsvorrichtung 14 ist dazu eingerichtet, von der an der Erntemaschine 1 angeordneten Positionsbestimmungseinrichtung kontinuierlich generierte Daten über die aktuelle Position der Erntemaschine 1 auf dem zu bearbeitenden Feld 36 zu empfangen und auszuwerten, und automatisch in Abhängigkeit von einer während der Auswertung der von der Positionsbestimmungseinrichtung empfangenen Daten bestimmten Änderung der Erntesituation die Steuersignale zur Anpassung der Weite des Erntegutdurchgangsspaltes 40 an die geänderte Erntesituation zu generieren.

Die von der Positionsbestimmungseinrichtung generierten Daten können von dem an der Erntemaschine 1 angeordneten Positionsortungssensor 37 und/oder dem Routenplanungssystem 38 und/oder den Einrichtungen der Erntemaschine 1, welche zur Bestimmung der aktuellen Fahrgeschwindigkeit der Erntemaschine 1, der Änderung der Hubhöhe des Vorsatzgerätes 2 und der Änderung der Antriebsdrehzahl des Vorsatzgerätes 2 eingerichtet sind, bereitgestellt werden.

Zusätzlich oder alternativ kann in der Speichereinheit 15 kann zumindest eine weitere Kennlinie 53 oder ein Kennlinienfeld für die einzustellende Weite des Erntegutdurchgangsspaltes 40 in Abhängigkeit von der Position der Überladeeinrichtung 13, der Position eines von einem Zugfahrzeug 54 gezogenen Ladebehälters 55 und eines Auftreffpunktes AP im Ladebehälter 55 hinterlegt sein, wobei die Recheneinheit 16 die zumindest eine Kennlinie 53 oder das zumindest eine Kennlinienfeld zur Ansteuerung der Spaltänderungsvorrichtung 45 auswertet. Dabei bilden zumindest die von der Detektionseinrichtung 45 bereitgestellten Daten die Eingangsgrößen und die einzustellende Weite des Erntegutdurchgangsspaltes 40 bildet die Ausgangsgröße. Daten des zumindest einen Sensors 29, der zur Detektion der Eigenschaften des Erntegutes EG eingerichtet ist, und/oder die optische Sensoranordnung 30 können zusätzliche Eingangsgrößen bilden.

Zusätzlich oder alternativ kann in der Speichereinheit 15 kann zumindest eine weitere Kennlinie 53 oder ein Kennlinienfeld für die einzustellende Weite des Erntegutdurchgangsspaltes 40 in Abhängigkeit von zumindest einer Eigenschaft des Erntegutes und dem Erntegutdurchsatz hinterlegt sein. Dabei bilden zumindest die von der Schwaddetektionseinrichtung 31 bereitgestellten Daten die Eingangsgrößen.

Weiterhin können in der Speichereinheit 15 mehrere relative oder absolute Schwellwerte für eine Änderung des Erntegutdurchsatzes hinterlegt sein. Das Überschreiten zumindest eines der Schwellwerte kann durch die Steuerungsvorrichtung 14 als Indikator zur Anpassung der Weite des Erntegutdurchgangsspaltes 40 interpretiert werden. Ein solcher Schwellwert kann vorgesehen sein, um eine Überregelung der Spaltänderungsvorrichtung 45 zu vermeiden.

Die Steuerungsvorrichtung 14 ist dazu eingerichtet, die Spaltänderungsvorrichtung 45 derart anzusteuern, um die Weite des Erntegutdurchgangsspaltes 40 mit zunehmender Trockenheit des Erntegutes und/oder abnehmendem Erntegutdurchsatz zu reduzieren. Eine zunehmende Trockenheit und/oder eine Abnahme des Erntegutdurchsatzes erfordern eine Reduzierung der Weite des Erntegutdurchgangsspaltes 40, um ein sicheres Überladen in den Ladebehälter 55 zu gewährleisten.

Bevorzugt ist die Steuerungsvorrichtung 14 zur automatischen Ansteuerung der Spaltänderungsvorrichtung 45 eingerichtet. In Verbindung mit den Daten, die durch die Schwaddetektionseinrichtung 31 generiert werden, lässt sich die Spaltänderungsvorrichtung 45 automatisch ansteuern, um das Nachbeschleunigungsorgan 12 effizient zu betreiben. Die einen im Wesentlichen progressiv ansteigenden Verlauf aufweisende Verstellcharakteristik der Spaltänderungsvorrichtung 45 ermöglicht dabei eine verbesserte Anpassung an unterschiedliche Erntebedingungen und/oder Ernteguteigenschaften. Eine feinfühligere und präzise Einstellung geringer Abstandswerte für die Weite des Erntegutdurchgangsspaltes 40 bei geringem Erntegutdurchsatz und/oder trockenem Erntegut steht einer zunehmend schnelleren Einstellung von Abstandswerte für die Weite des Erntegutdurchgangsspaltes 40 gegenüber, wenn der Erntegutdurchsatz überproportional ansteigt. Ein überproportionaler Anstieg tritt zum Beispiel nach dem Anschneiden oder dem Wiedereinfahren in den Bestand nach dem Durchfahren eines Vorgewendes auf.

Sowohl das Anschneiden eines Feldes als auch das Durchfahren eines Vorgewendes haben Einfluss auf die Überladebedingungen. Beim Anschneiden eines Feldes kann die Situation des Überladens nach hinten auftreten, wenn das Zugfahrzeug 54 und der daran angeordnete Ladebehälter 55 oder Anhänger aus Platzgründen nicht seitlich neben dem Erntefahrzeug 1 fahren können.

Des Weiteren kann die Steuerungsvorrichtung 14 dazu eingerichtet sein, bei einer Detektion des Einfahrens in den Erntegutbestand eine dem Antrieb des Vorsatzgerätes 2 dienende Antriebsvorrichtung anzusteuern, um die Antriebsdrehzahl des Vorsatzgerätes 2 temporär zu erhöhen und bei Detektion des Ausfahrens aus dem Erntegutbestand temporär abzusenken.

Die Ansteuerung der Spaltänderungsvorrichtung 45 durch die Steuerungsvorrichtung 14 kann in Abhängigkeit einer Kombination aus der Änderung der Antriebsdrehzahl, der Hubhöhe des Vorsatzgerätes 2 und/oder der aktuellen Fahrgeschwindigkeit der Erntemaschine 1 erfolgen.

### Bezugszeichenliste

| | | | |
|---|---|---|---|
| 1 | Erntemaschine | 33 | Schwad |
| 2 | Vorsatzgerät | 34 | Bussystem |
| 3 | Einzugsorgan | 35 | Sensoranordnung |
| 4 | Obere Einzugswalzen | 36 | Feld |
| 5 | Untere Einzugswalzen | 37 | Positionsortungssensor |
| 6 | Häckselvorrichtung | 38 | Routenplanungssystem |
| 7 | Häckseltrommel | 39 | Abtaststrahl |
| 8 | Häckselmesser | 40 | Erntegutdurchgangsspalt |
| 9 | Gegenschneide | 41 | Wandung |
| 10 | Förderkanal | 42 | Drehachse |
| 11 | Nachbearbeitungsvorrichtung | 43 | Führung |
| 12 | Nachbeschleunigungsorgan | 44 | Gehäuse |
| 13 | Überladeeinrichtung | 45 | Spaltänderungsvorrichtung |
| 14 | Steuerungsvorrichtung | 46 | Antriebselement/Hydraulikzylinder |
| 15 | Speichereinheit | 47 | Antriebselement/Welle |
| 16 | Recheneinheit | 48 | Antriebselement/Hebelanordnung |
| 17 | Fahrerkabine | 49 | Erster Anlenkpunkt |
| 18 | Eingabe-Ausgabe-Einheit | 50 | Ortsfeste Drehachse |
| 19 | Antriebsmotor | 51 | Zweiter Anlenkpunkt |
| 20 | Achse | 52 | Detektionseinrichtung |
| 21 | Achse | 53 | Kennlinie |
| 22 | Linearaktor | 54 | Zugfahrzeug |
| 23 | Höhensensor | 55 | Ladebehälter |
| 24 | Aktorik | 56 | Breite |
| 25 | Drehwinkelsensor | 56' | Breite |
| 26 | Auswurfklappe | 57 | Abschnitt |
| 27 | Aktuator | 58 | Abschnitt |
| 28 | Winkelsensor | AP | Auftreffpunkt |
| 29 | Sensor | EG | Erntegut |
| 30 | Sensoranordnung | FR | Fahrtrichtung |
| 31 | Schwaddetektionseinrichtung | H | Höhenkontur |
| 32 | Optischer Sensor | VR | Bewegung (Pfeil) |

## Patentansprüche

1. Selbstfahrende landwirtschaftliche Erntemaschine (1), insbesondere Feldhäcksler, mit einem Vorsatzgerät (2), zumindest einem Nachbeschleunigungsorgan (12) zur veränderlichen Beschleunigung von Erntegut und mit einer dem Nachbeschleunigungsorgan (12) nachgeordneten Überladeeinrichtung (13) zum Auswerfen des Ernteguts in einen Ladebehälter (55), wobei zur veränderlichen Beschleunigung des Erntegutes die Weite eines Erntegutdurchgangsspaltes (40) des Nachbeschleunigungsorgans (12) mittels einer Spaltänderungsvorrichtung (45) anpassbar ist, wobei der Spaltänderungsvorrichtung (45) eine Steuerungsvorrichtung (14) zugeordnet ist, die zur Ansteuerung der Spaltänderungsvorrichtung (45) durch von der Steuerungsvorrichtung (14) generierte Steuersignale eingerichtet ist, **dadurch gekennzeichnet, dass** die Steuerungsvorrichtung (14) dazu eingerichtet ist, von einer an der Erntemaschine (1) angeordneten Positionsbestimmungseinrichtung kontinuierlich generierte Daten über die aktuelle Position der Erntemaschine (1) auf einem zu bearbeitenden Feld (36) zu empfangen und auszuwerten, und automatisch in Abhängigkeit von einer während der Auswertung der von der Positionsbestimmungseinrichtung empfangenen Daten bestimmten Änderung der Erntesituation die Steuersignale zur Anpassung der Weite des Erntegutdurchgangsspaltes (40) an die geänderte Erntesituation zu generieren.

2. Selbstfahrende Erntemaschine (1) nach Anspruch 1, **dadurch gekennzeichnet, dass** die Positionsbestimmungseinrichtung einen an der Erntemaschine (1) angeordneten Positionsortungssensor (37) und/oder eine Telematikeinheit umfasst.

3. Selbstfahrende Erntemaschine (1) nach Anspruch 1 oder 2, **dadurch gekennzeichnet, dass** die Positionsbestimmungseinrichtung mit einem Routenplanungssystem (38) der Erntemaschine (1) datentechnisch verbunden ist, welches zur Übermittlung von Informationen, insbesondere topographischer Daten, über das zu bearbeitende Feld (36) an die Positionsbestimmungseinrichtung eingerichtet ist.

4. Selbstfahrende Erntemaschine (1) nach einem der Ansprüche 1 bis 3, **dadurch gekennzeichnet, dass** die Positionsbestimmungseinrichtung mit Einrichtungen der Erntemaschine (1) datentechnisch verbunden ist, welche zur Bestimmung einer aktuellen Fahrgeschwindigkeit der Erntemaschine (1), einer Änderung der Hubhöhe des Vorsatzgerätes (2) und einer Änderung der Antriebsdrehzahl des Vorsatzgerätes (2) eingerichtet sind, wobei die Positionsbestimmungseinrichtung aus zumindest einem dieser Parameter die Daten über die aktuelle Position der Erntemaschine (1) generiert.

5. Selbstfahrende Erntemaschine (1) nach einem der Ansprüche 1 bis 4 **dadurch gekennzeichnet, dass** die Erntemaschine (1) zumindest eine Sensoranordnung (35) aufweist, die zur Detektion einer Schichthöhe in dem Einzugsorgan (3) eingerichtet ist, wobei die Steuerungsvorrichtung (14) dazu eingerichtet ist, die von der zumindest einen Sensoranordnung (35) bestimmten Daten zur Schichthöhe zu empfangen und zur Bestimmung eines Erntegutdurchsatzes auszuwerten.

6. Selbstfahrende Erntemaschine (1) nach einem der vorangehenden Ansprüche, **dadurch gekennzeichnet, dass** die Erntemaschine (1) mit zumindest einem optischen Sensor (32) zur Erkennung eines Vorfeldbereiches ausgestattet ist, wobei der zumindest eine Sensor (32) dazu eingerichtet ist, das Vorhandensein von Erntegut und/oder die Erntegutart im Vorfeld der Erntemaschine (1) zu detektieren und diese Daten an die Steuerungsvorrichtung (14) zur Auswertung zu übertragen.

7. Selbstfahrende Erntemaschine (1) nach einem der vorangehenden Ansprüche, **dadurch gekennzeichnet, dass** die Erntemaschine (1) mit zumindest einem entlang des Erntegutstroms angeordneten Sensor (29) ausgestattet ist, welcher dazu eingerichtet ist, Eigenschaften des Erntegutes zu detektieren und diese Daten an die Steuerungsvorrichtung (14) zur Auswertung zu übertragen.

8. Selbstfahrende Erntemaschine (1) nach einem der vorangehenden Ansprüche, **dadurch gekennzeichnet, dass** die Steuerungsvorrichtung (14) dazu eingerichtet ist, bei einem Einfahren in einen Erntegutbestand oder einem Ausfahren aus einem Erntegutbestand die Spaltänderungsvorrichtung (45) anzusteuern, um die Weite des Erntegutdurchgangsspaltes (40) auf einen für die zu erntende Erntegutart und/oder die bestehenden Überladebedingungen spezifischen Minimalwert abzusenken.

9. Selbstfahrende Erntemaschine (1) nach Anspruch 7, **dadurch gekennzeichnet, dass** die Steuerungsvorrichtung (14) dazu eingerichtet ist, bei einer Detektion des Einfahrens in den Erntegutbestand eine dem Antrieb des Vorsatzgerätes (2) dienende Antriebsvorrichtung anzusteuern, um die Antriebsdrehzahl des Vorsatzgerätes (2) temporär zu erhöhen und bei Detektion des Ausfahrens aus dem Erntegutbestand temporär abzusenken.

10. Selbstfahrende Erntemaschine (1) nach einem der vorangehenden Ansprüche, **dadurch gekennzeichnet, dass** das Nachbeschleunigungsorgan (12) eine Drehachse (42) aufweist, die endseitig in Führungen (43) gelagert ist, die an Seitenwänden, die ein das Nachbeschleunigungsorgan (12) zumindest abschnittsweise ummantelndes Gehäuse (44) begrenzen, angeordnet sind, und dass die Spaltänderungsvorrichtung (45) zur, insbesondere translatorischen, Bewegung (VR) des Nachbeschleunigungsorgans (12) eine Aktorik umfasst, mittels der die Weite des Erntegutdurchgangsspaltes (40) veränderbar ist.

11. Selbstfahrende Erntemaschine (1) nach einem der vorangehenden Ansprüche, **dadurch gekennzeichnet, dass** die Steuerungsvorrichtung (14) eine Speichereinheit (15) umfasst, in der zumindest eine Kennlinie (53) oder ein Kennlinienfeld für die einzustellende Weite des Erntegutdurchgangsspaltes (40) in Abhängigkeit zumindest von der Position der Erntemaschine (1) hinterlegt ist, und dass die Steuerungsvorrichtung (14) eine Recheneinheit (16) umfasst, welche die zumindest eine Kennlinie (53) oder das zumindest eine Kennlinienfeld zur Ansteuerung der Spaltänderungsvorrichtung (45) auswertet.

12. Selbstfahrende Erntemaschine (1) nach einem der vorangehenden Ansprüche, **dadurch gekennzeichnet, dass** die Steuerungsvorrichtung (14) dazu eingerichtet ist, von einer Schwaddetektionseinrichtung (31) generierte Daten, welche Eigenschaften des von der Erntemaschine (1) in Form eines Schwads (33) aufzunehmenden Erntegutes (EG) umfassen, und/oder von einer Detektionseinrichtung (52) generierte Daten, welche zumindest die Position der Überladeeinrichtung (13) umfassen, zu empfangen und auszuwerten, und in Abhängigkeit von der Auswertung der Daten die Steuersignale zur Anpassung der Weite des Erntegutdurchgangsspaltes (40) zu generieren.

13. Selbstfahrende Erntemaschine (1) nach Anspruch 12, **dadurch gekennzeichnet, dass** die Schwaddetektionseinrichtung (31) mit zumindest einem optischen Sensor (32) zur Erkennung eines Vorfeldbereiches ausgestattet ist, wobei der zumindest eine Sensor (32) das Vorhandensein und/oder eine Form des Schwads (33) vor der Erntemaschine (1) erkennt, und dass die Schwaddetektionseinrichtung (31) diese Daten an die Steuerungsvorrichtung (14) überträgt.

14. Selbstfahrende Erntemaschine (1) nach Anspruch 12 oder 13, **dadurch gekennzeichnet, dass** die Detektionseinrichtung (45) einen Drehwinkelsensor (23) zur Erfassung eines Drehwinkels sowie einen Höhensensor (25) zur Erfassung eines Höhenschwenkwinkels der Überladeeinrichtung (13) und einen Winkelsensor zur Erfassung eines Schwenkwinkels einer an der Überladeeinrichtung (13) am auswurfseitigen Ende angeordneten Auswurfklappe (26) umfasst.

15. Verfahren zum Betreiben einer selbstfahrenden landwirtschaftlichen Erntemaschine (1), insbesondere eines Feldhäckslers, mit zumindest einem Nachbeschleunigungsorgan (12) zur veränderlichen Beschleunigung von Erntegut und mit einer dem Nachbeschleunigungsorgan (12) nachgeordneten Überladeeinrichtung (13) zum Auswerfen des Ernteguts in einen Ladebehälter (55), wobei zur veränderlichen Beschleunigung des Erntegutes die Weite eines Erntegutdurchgangsspaltes (40) des Nachbeschleunigungsorgans (12) mittels einer Spaltänderungsvorrichtung (45) angepasst wird, wobei die Spaltänderungsvorrichtung (45) durch von einer Steuerungsvorrichtung (14) generierte Steuersignale angesteuert wird, **dadurch gekennzeichnet, dass** die Steuerungsvorrichtung (14) von einer an der Erntemaschine (1) angeordneten Positionsbestimmungseinrichtung kontinuierlich generierte Daten über die aktuelle Position der Erntemaschine (1) auf einem zu bearbeitenden Feld (36) empfängt, auswertet und automatisch in Abhängigkeit von einer während der Auswertung der von der Positionsbestimmungseinrichtung empfangenen Daten bestimmten Änderung der Erntesituation die Steuersignale zur Anpassung der Weite des Erntegutdurchgangsspaltes (40) an die geänderte Erntesituation zu generiert.
